# FASCICULE DE BREVET EUROPEEN

(11) **EP 2 156 547 B1**
(45) Date de publication et mention de la délivrance du brevet: **02.08.2017**
(21) Numéro de dépôt: 08805827.6
(22) Date de dépôt: 21.05.2008
(51) Int. Cl.: H02H 7/06, H02J 7/14

(54) **PROCEDE DE COMMANDE D'UNE MACHINE ELECTRIQUE TOURNANTE EN CAS DE DELESTAGE DE CHARGE, ET MODULE DE COMMANDE ET DE PUISSANCE CORRESPONDANTE**
VERFAHREN ZUR STEUERUNG EINER ELEKTRISCHEN DREHMASCHINE IM FALLE EINER LASTENSTEUERUNG UND ENTSPRECHENDES STROMSTEUERUNGSMODUL
METHOD FOR CONTROLLING A ROTARY ELECTRIC MACHINE IN CASE OF LOAD SHEDDING AND CORRESPONDING POWER CONTROL MODULE

(30) Priorité: 08.06.2007 FR 0755625
(43) Date de publication de la demande: 24.02.2010
(73) Titulaire: Valeo Equipements Electriques Moteur, 94046 Créteil Cedex (FR)
(72) Inventeur: CHEMIN, Michaël, F-51700 Festigny (FR)
(86) Numéro de dépôt international: PCT/FR2008/050881
(87) Numéro de publication internationale: WO 2009/000989

(56) Documents cités:
- EP-A- 1 443 623
- DE-A1- 19 835 316
- FR-A- 2 874 765

## Description

### DOMAINE TECHNIQUE DE L'INVENTION.

La présente invention concerne un procédé de commande d'une machine électrique tournante connectée à un réseau électrique, notamment un réseau de bord d'un véhicule automobile, en cas de délestage de charge, ainsi qu'un module de commande et de puissance de cette machine adapté à la mise en oeuvre de ce procédé.

### ARRIERE PLAN TECHNOLOGIQUE DE L'INVENTION.

Dans un véhicule automobile, ce réseau de bord sert à alimenter les différents équipements électriques dont est équipé le véhicule. L'alimentation est fournie par au moins une batterie. Celle-ci est rechargée grâce à une machine électrique tournante, à partir de l'énergie fournie par la rotation du moteur thermique du véhicule. Par machine électrique tournante, on entend de façon plus générale toute machine électrique tournante monophasée ou polyphasée utilisée pour la production de courant continu de sortie alimentant le réseau de bord. Il peut en particulier s'agir d'un alternateur ou encore d'un alterno-démarreur.

En cas de déconnexion brutale d'une charge électrique du réseau de bord, ou d'une batterie, ou des deux, il se crée un phénomène de délestage de charge ("load-dump" en anglais), qui occasionne une surtension sur le réseau de bord. En effet, une régulation d'un courant inducteur dans la machine ne pouvant agir assez rapidement à la suite du délestage de charge, la machine continue à délivrer le même courant de sortie alors que la consommation en courant du côté du réseau de bord a chuté.

Classiquement, la batterie du véhicule est une batterie 14 volts. En principe, grâce à sa faible résistance interne, elle limite à environ 17 volts les pics de tension qui se produisent sur le réseau de bord du véhicule en cas de délestage de charge. Cette batterie absorbe ainsi les petites surtensions. Néanmoins, en cas de déconnexion de la batterie (due à la rupture d'un câble d'alimentation, par exemple), une surtension très élevée peut se produire sur le réseau de bord. En effet, le courant délivré par la machine charge les capacités (y compris les capacités parasites) reliées au réseau de bord, et par conséquent fait monter de façon importante la tension continue sur le réseau de bord.

Cette surtension risque d'endommager les équipements électriques alimentés par le réseau de bord. C'est pourquoi tous les équipements électriques du véhicule sont dimensionnés pour résister à une tension maximale d'environ 32 volts, ce qui correspond à une surtension d'environ 20 volts.

On connaît diverses solutions permettant de limiter la tension sur le réseau de bord à une tension maximale admissible, c'est-à-dire la tension la plus élevée que peuvent supporter les équipements électriques du véhicule sans risque d'endommagement.

Les demandes de brevet EP 1 443 623 A et DE 198 35 316 A1 décrivent un procédé de commande d'une machine électrique dans lequel un mode de fonctionnement nominal du pont d'interrupteurs est rétabli en fonction de la tension de sortie.

La solution exposée dans la demande de brevet FR2874765 prend en compte l'utilisation future de batteries 42 volts dans les véhicules, rendue nécessaire par la tendance à la multiplication des équipements électriques à forte consommation d'énergie. En effet, selon les spécifications d'une future norme européenne (encore en cours d'élaboration), les équipements électriques du réseau de bord du véhicule devront vraisemblablement être dimensionnés pour fonctionner jusqu'à une tension de 48 volts, et pour résister à une tension maximale de 58 volts, ce qui correspond à une surtension de seulement 10 volts.

Dans une architecture de base classique, où un module de commande et de puissance d'une machine électrique tournante, présentant une pluralité d'enroulements de phases, comprend :
- un circuit de puissance comprenant une pluralité de branches destinées à être associées à la pluralité d'enroulement de phases, et
- un circuit de commande construit pour piloter le circuit de puissance lorsque la machine fonctionne dans un mode nominal,
la solution décrite dans le document FR2874765 propose de construire le circuit de commande pour, en outre :
- surveiller une tension de sortie du circuit de puissance;
- verrouiller au moins une branche du circuit de puissance dans un état de conduction lorsque la tension de sortie atteint une première valeur de seuil, de sorte que la machine fonctionne dans un mode dégradé.
- rétablir le fonctionnement de la machine dans le mode nominal, lorsque la tension de sortie atteint une deuxième valeur de seuil.

Ce critère de rétablissement du mode nominal de fonctionnement, basé sur la tension de sortie, présente cependant l'inconvénient de ne pas être représentatif du changement d'état effectif, magnétiquement parlant, de la machine tournante, qui seul permet de compenser efficacement le délestage du réseau.

### DESCRIPTION GENERALE DE L'INVENTION.

La présente invention vise donc à pallier cet inconvénient.

Elle a précisément pour objet un procédé de commande d'une machine électrique tournante connectée à un réseau électrique, en cas de délestage de charge.

Agencés de manière connue en soi, cette machine comprend :
- une pluralité d'enroulements de phases ;
- un circuit de puissance, comportant une pluralité de branches, formées chacune d'un pont d'interrupteurs, destinées à être associées aux enroulements de phases, apte à alimenter le réseau électrique sous une tension de sortie égale à une tension nominale dans un mode de fonctionnement nominal du pont d'interrupteurs;
- un enroulement d'excitation parcouru par un courant d'excitation produisant un flux magnétique dans un circuit magnétique d'excitation ;
- un circuit électronique de commande et de régulation pilotant le circuit de puissance et contrôlant le courant d'excitation.

Le procédé de commande selon l'invention est avantageusement du type de ceux, connus de l'état de la technique, consistant à verrouiller le pont d'interrupteurs d'au moins une des branches du circuit de puissance dans un état de conduction lorsque la tension de sortie dépasse un seuil de tension prédéterminé supérieure à la tension nominale, mais, de manière remarquable, à la différence du procédé divulgué dans la demande FR2874765, le mode de fonctionnement nominal du pont d'interrupteurs est rétabli indépendamment de la tension de sortie.

De préférence, le mode de fonctionnement nominal du pont d'interrupteurs est rétabli après un délai prédéterminé au moins égal au temps de démagnétisation du circuit magnétique d'excitation.

Alternativement, le mode de fonctionnement nominal du pont d'interrupteurs est rétabli préférentiellement lorsque le courant d'excitation passe en dessous d'un seuil d'intensité prédéterminé.

Alternativement encore, le mode de fonctionnement nominal du pont d'interrupteurs est rétabli avantageusement après une durée au moins égale au temps de démagnétisation du circuit magnétique d'excitation et lorsque le courant d'excitation passe en dessous d'un seuil d'intensité prédéterminé.

Dans le procédé de commande selon l'invention, on tire bénéfice du fait que le circuit de puissance comprend en outre des moyens d'accumulation d'énergie.

De préférence, le procédé de commande d'une machine électrique tournante selon l'invention est mis en oeuvre en cas de délestage de charge d'un réseau de bord d'un véhicule automobile.

La présente invention a également pour objet un module de commande et de puissance d'une machine électrique tournante connectée à un réseau électrique, cette machine présentant une pluralité d'enroulements de phases et un enroulement d'excitation parcouru par un courant d'excitation produisant un flux magnétique dans un circuit magnétique d'excitation.

Agencés de manière connue en soi, ce module de commande et de puissance comprend :
- un circuit de puissance, comportant une pluralité de branches, formées chacune d'un pont d'interrupteurs, destinées à être associées aux enroulements de phases, et apte à alimenter le réseau électrique sous une tension de sortie égale à une tension nominale dans un mode de fonctionnement nominal du pont d'interrupteurs;
- un circuit électronique de commande et de régulation pilotant le circuit de puissance et contrôlant le courant d'excitation, ce circuit électronique comportant en outre des moyens de verrouillage du pont d'interrupteurs d'au moins une des branches du circuit de puissance dans un état de conduction, lorsque la tension de sortie dépasse un seuil de tension prédéterminé supérieure à la tension nominale.

Selon l'invention, ce module de commande et de régulation comporte en outre des moyens de rétablissement du mode de fonctionnement nominal du pont d'interrupteurs indépendamment de la tension de sortie.

De préférence, ces moyens de rétablissement agissent après un délai prédéterminé au moins égal au temps de démagnétisation du circuit magnétique d'excitation.

Alternativement, ces moyens de rétablissement agissent préférentiellement lorsque le courant d'excitation passe en dessous d'un seuil d'intensité prédéterminé.

Alternativement encore, ces moyens de rétablissement agissent avantageusement après une durée au moins égale au temps de démagnétisation du circuit magnétique d'excitation et lorsque le courant d'excitation passe en dessous d'un seuil d'intensité prédéterminé.

Le circuit de puissance du module de commande et de puissance selon l'invention comprend en outre de préférence des moyens d'accumulation d'énergie.

L'invention concerne aussi une machine électrique tournante comprenant un module de commande et de puissance tel que décrit ci-dessus.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La Figure 1 est un schéma de principe d'un système micro-hybride avec alterno-démarreur du type dit « 14+X » destiné à fournir l'énergie électrique de bord d'un véhicule automobile.
Les Figures 2a, 2b, et 2c représentent respectivement l'évolution dans le temps de la tension du réseau de bord de type « 14+X » en cas de délestage de charge, l'évolution de l'intensité débitée par l'alterno-démarreur, et l'évolution du courant d'excitation dans les mêmes circonstances.

### DESCRIPTION DES MODES DE REALISATION PREFERES DE L'INVENTION.

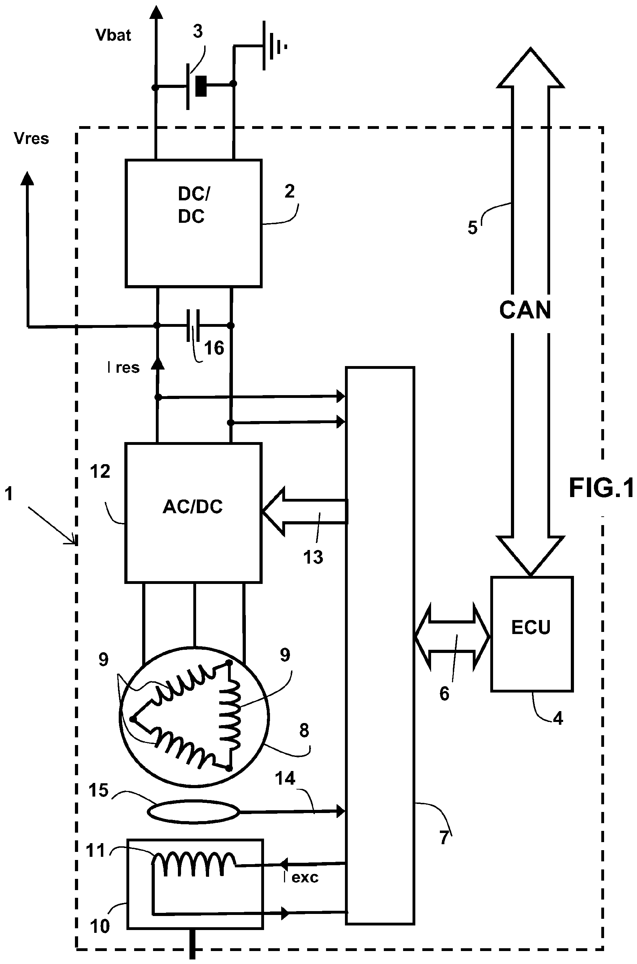

Les modes de réalisation préférés de l'invention sont particulièrement adaptés à un système micro-hybride 1 tel que représenté sur la Figure 1.

Le système micro-hybride 1 comprend une machine électrique tournante fournissant une énergie électrique au réseau de bord dit « 14+X », c'est-à-dire à une tension de réseau Vres ayant une valeur nominale Vn supérieure à 14V, d'une part, et, d'autre part, à un convertisseur Continu/Continu réversible 2 alimentant la batterie de bord 3, à laquelle le réseau électrique standard 12V du véhicule est relié.

Le système micro-hybride 1 comprend également une unité de commande électronique 4, interfacée avec un bus embarqué 5 de type CAN, échangeant des informations 6 avec un circuit électronique de commande et de régulation 7 de la machine électrique tournante.

La machine électrique tournante est de préférence une machine triphasée dont le stator 8 comporte les enroulements de phases 9.

Le circuit magnétique d'excitation constitue le rotor 10 de la machine, et comporte un enroulement d'excitation 11 dont le courant d'excitation Iexc est contrôlé par le circuit électronique de commande et de régulation 7.

Les enroulements de phases 9 sont connectés à un convertisseur réversible alternatif/ continu 12 d'un circuit de puissance.

Ce convertisseur 12 est piloté 13 par le circuit électronique de commande et de régulation 7 en fonction des signaux 14 issus des capteurs de position 15 du rotor 10, de manière à charger une ultracapacité 16 du circuit de puissance sous la tension nominale Vn du réseau « 14+X ».

Dans le cas préféré d'une machine triphasée, le convertisseur 12 comporte trois branches destinées à être associées chacune à chacun des trois enroulements de phases 9.

Chacune des branches est formée d'un pont d'interrupteurs fonctionnant en redresseur synchrone dans un mode de fonctionnement nominal.

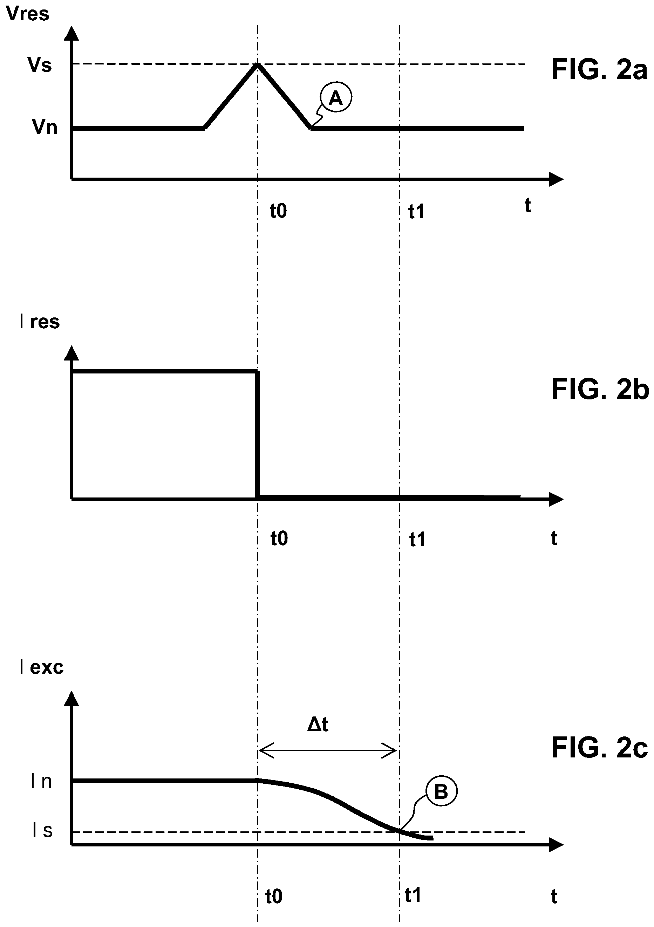

Comme le représente la Figure 2a, en cas de délestage de charge du réseau, la tension de sortie Vres du convertisseur alternatif/ continu augmente brusquement sans que la régulation du système 1 basée sur le contrôle du courant d'excitation Iexc soit suffisante pour contrôler la surtension à cause de la constante de temps du circuit d'excitation.

Afin de contrôler rapidement cette surtension, les interrupteurs des ponts sont commutés dans un état de conduction dès que la tension de sortie Vres atteint un seuil de tension Vs à un instant to.

Les enroulements de phases 9 étant à ce moment court-circuités, l'intensité Ires débitée vers le réseau devient nulle, comme le montre la Figure 2b,

La chute du courant d'excitation Iexc à partir de l'instant to représentée sur la Figure 2c découle du fonctionnement normal de la régulation.

Dès que la surtension est détectée, la régulation ramène vers zéro une intensité d'excitation nominale In, mais la démagnétisation du rotor 10 ne peut être obtenue qu'après un intervalle de temps Δt, qui correspond au temps de réponse du circuit magnétique d'excitation 10 pour un changement d'état effectif de la machine tournante, magnétiquement parlant (Point B). En pratique, cet intervalle de temps Δt est de l'ordre de 300 ms.

Le mode de fonctionnement nominal en redresseur synchrone des ponts interrupteurs n'est donc rétabli à l'instant t1 qu'après un délai prédéterminé au moins égal à l'intervalle de temps Δt.

Ce délai est implémenté soit par un circuit retardateur dédié du circuit électronique de commande et de régulation 7, soit par un micrologiciel approprié.

En variante, le mode de fonctionnement nominal des ponts d'interrupteurs n'est rétabli que lorsque le courant d'excitation Iexc passe en dessous d'un seuil d'intensité prédéterminé Is au point B, comme le montre également la Figure 2c. Ce seuil d'intensité est de préférence de l'ordre de 1A.

Dans cette variante, la comparaison de l'intensité d'excitation à l'intensité de seuil est réalisée par le circuit de commande et de régulation 7, soit au moyen d'un circuit comparateur spécifique, soit par une adaptation du micrologiciel.

Dans une autre variante, le circuit électronique de commande et de régulation 7 combine les informations de franchissement du seuil d'intensité prédéterminé Is par le courant d'excitation Iexc, et de l'écoulement d'une durée au moins égale au temps de démagnétisation Δt pour déterminer l'instant t1 de rétablissement du mode de fonctionnement nominal des ponts d'interrupteurs.

Quand le phénomène de surtension est achevé (au point A de la Figure 2a), le maintien de la tension nominale Vn du réseau est assuré par le convertisseur Continu/Continu réversible 2 à partir de la batterie 3, pendant toute la durée de la mise en court-circuit des enroulements de phases 9.

Comme il va de soi, l'invention ne se limite pas aux seuls modes d'exécution préférentiels décrits ci-dessus.

Notamment, le mode de fonctionnement nominal des ponts d'interrupteurs peut être rétabli selon des critères indépendants de la tension de sortie Vres autres que ceux décrits ci-dessus, par exemple quand la tension aux bornes de l'enroulement d'excitation 11 est inférieure à une valeur de seuil prédéterminée.

L'exemple d'une machine électrique tournante triphasée dont le circuit magnétique d'excitation constitue le rotor 10, et les enroulements de phases 9, le stator 8, n'est pas non plus limitatif: la description ci-dessus s'appliquerait aussi bien à une machine électrique tournante où les rôles du stator et du rotor seraient échangés, et le nombre de phases accru, sans modification de fond.

L'invention embrasse donc au contraire toutes les variantes possibles de réalisation qui resteraient dans le cadre défini par les revendications ci-après.

## Revendications

1. Procédé de commande d'une machine électrique tournante connectée à un réseau électrique, en cas de délestage de charge, ladite machine comprenant :
- une pluralité d'enroulements de phases (9);
- un circuit de puissance (12,16), comportant une pluralité de branches formées chacune d'un pont d'interrupteurs destinées à être associées auxdits enroulements de phases (9), apte à alimenter ledit réseau électrique sous une tension de sortie (Vres) égale à une tension nominale (Vn) dans un mode de fonctionnement nominal dudit pont d'interrupteurs;
- un enroulement d'excitation (11) parcouru par un courant d'excitation (Iexc) produisant un flux magnétique dans un circuit magnétique d'excitation (10) ;
- un circuit électronique de commande et de régulation (7) pilotant ledit circuit de puissance (12,16) et contrôlant ledit courant d'excitation (Iexc) ;
et ledit procédé étant du type de ceux consistant à verrouiller ledit pont d'interrupteurs d'au moins une desdites branches dudit circuit de puissance (12,16) dans un état de conduction lorsque ladite tension de sortie (Vres) dépasse un seuil de tension prédéterminé (Vs) supérieure à ladite tension nominale (Vn),
**caractérisé en ce que** ledit mode de fonctionnement nominal dudit pont d'interrupteurs est rétabli selon un critère indépendant de la dite tension de sortie (Vres).

2. Procédé de commande d'une machine électrique tournante selon la revendication 1, **caractérisé en ce que** ledit mode de fonctionnement nominal dudit pont d'interrupteurs est rétabli après un délai prédéterminé au moins égal au temps de démagnétisation (Δt) dudit circuit magnétique d'excitation (10).

3. Procédé de commande d'une machine électrique tournante selon la revendication 1, **caractérisé en ce que** ledit mode de fonctionnement nominal dudit pont d'interrupteurs est rétabli lorsque ledit courant d'excitation (Iexc) passe en dessous d'un seuil d'intensité prédéterminé (Is).

4. Procédé de commande d'une machine électrique tournante selon la revendication 1, **caractérisé en ce que** ledit mode de fonctionnement nominal dudit pont d'interrupteurs est rétabli après une durée au moins égale au temps de démagnétisation (Δt) dudit circuit magnétique d'excitation et lorsque ledit courant d'excitation (Iexc) passe en dessous d'un seuil d'intensité prédéterminé (Is).

5. Procédé de commande d'une machine électrique tournante selon l'une quelconque des revendications 1 à 4 précédentes, **caractérisé en ce que** ledit circuit de puissance (12,16) comprend en outre des moyens d'accumulation d'énergie (16).

6. Procédé de commande d'une machine électrique tournante selon l'une quelconque des revendications 1 à 5 précédentes, **caractérisé en ce que** ledit réseau électrique est un réseau de bord d'un véhicule automobile.

7. Module de commande et de puissance (7,12,16) d'une machine électrique tournante connectée à un réseau électrique, ladite machine présentant une pluralité d'enroulements de phases (9) et un enroulement d'excitation (11) parcouru par un courant d'excitation (Iexc) produisant un flux magnétique dans un circuit magnétique d'excitation (10), ledit module (7,12,16) comprenant :
- un circuit de puissance (12,16), comportant une pluralité de branches formées chacune d'un pont d'interrupteurs destinées à être associées auxdits enroulements de phases (9), apte à alimenter ledit réseau électrique sous une tension de sortie (Vres) égale à une tension nominale (Vn) dans un mode de fonctionnement nominal dudit pont d'interrupteurs;
- un circuit électronique de commande et de régulation (7) pilotant ledit circuit de puissance (12,16) et contrôlant ledit courant d'excitation (Iexc), ledit circuit électronique (7) comportant en outre des moyens de verrouillage dudit pont d'interrupteurs d'au moins une desdites branches dudit circuit de puissance (12,16) dans un état de conduction lorsque ladite tension de sortie (Vres) dépasse un seuil de tension prédéterminé supérieure à ladite tension nominale (Vn),
**caractérisé en ce que** ledit module comporte en outre des moyens de rétablissement du mode de fonctionnement nominal dudit pont d'interrupteurs selon un critère indépendant de ladite tension de sortie (Vres).

8. Module de commande et de puissance (7,12,16) d'une machine électrique tournante selon la revendication 7, **caractérisé en ce que** lesdits moyens de rétablissement agissent après un délai prédéterminé au moins égal au temps de démagnétisation (Δt) dudit circuit magnétique d'excitation (10).

9. Module de commande et de puissance (7,12,16) d'une machine électrique tournante selon la revendication 7, **caractérisé en ce que** lesdits moyens de rétablissement agissent lorsque ledit courant d'excitation (Iexc) passe en dessous d'un seuil d'intensité prédéterminé (Is).

10. Module de commande et de puissance (7,12,16) d'une machine électrique tournante selon la revendication 7, **caractérisé en ce que** lesdits moyens de rétablissement agissent après une durée au moins égale au temps de démagnétisation (Δt) dudit circuit magnétique d'excitation (10) et lorsque ledit courant d'excitation (Iexc) passe en dessous d'un seuil d'intensité prédéterminé (Is).

11. Module de commande et de puissance (7,12,16) d'une machine électrique tournante selon l'une quelconque des revendications 7 à 10 précédentes, **caractérisé en ce que** ledit circuit de puissance comprend en outre des moyens d'accumulation d'énergie (16).

12. Machine électrique tournante comprenant un module de commande et de puissance (7,12,16) selon l'une quelconque des revendications 7 à 11 précédentes.

## Patentansprüche

1. Verfahren zur Steuerung einer elektrischen Drehmaschine, die an ein Stromnetz angeschlossen ist, im Falle einer Lastensteuerung, wobei die Maschine Folgendes aufweist:
- mehrere Phasenwicklungen (9);
- eine Leistungsschaltung (12, 16), die mehrere Zweige aufweist, die jeweils aus einer Brücke von Schaltern gebildet sind, die dazu bestimmt sind, mit den Phasenwicklungen (9) verbunden zu werden, die geeignet ist, das Stromnetz mit einer Ausgangsspannung (Vres), die gleich einer Nennspannung (Vn) in einem Nennbetriebsmodus der Brücke von Schaltern ist, zu speisen;
- eine Erregerwicklung (11), die von einem Erregerstrom (Iexc) durchflossen wird, der einen magnetischen Fluss in einem Erregermagnetkreis (10) erzeugt;
- eine elektronische Schaltung (7) zur Steuerung und zur Regelung, die die Leistungsschaltung (12, 16) steuert und den Erregerstrom (Iexc) überwacht;
und wobei das Verfahren von der Art von jenen ist, die darin bestehen, die Brücke von Schaltern von mindestens einem der Zweige der Leistungsschaltung (12, 16) in einem leitenden Zustand zu verriegeln, wenn die Ausgangsspannung (Vres) eine vorbestimmte Spannungsschwelle (Vs) überschreitet, die höher als die Nennspannung (Vn) ist,
**dadurch gekennzeichnet, dass** der Nennbetriebsmodus der Brücke von Schaltern nach einem Kriterium wieder hergestellt wird, das von der Ausgangsspannung (Vres) unabhängig ist.

2. Verfahren zur Steuerung einer elektrischen Drehmaschine nach Anspruch 1, **dadurch gekennzeichnet, dass** der Nennbetriebsmodus der Brücke von Schaltern nach einer vorherbestimmten Zeitspanne wieder hergestellt wird, die mindestens gleich der Entmagnetisierungszeit (Δt) des Erregermagnetkreises (10) ist.

3. Verfahren zur Steuerung einer elektrischen Drehmaschine nach Anspruch 1, **dadurch gekennzeichnet, dass** der Nennbetriebsmodus der Brücke von Schaltern wieder hergestellt wird, wenn der Erregerstrom (Iexc) einen vorbestimmten Intensitätsschwellenwert (Is) unterschreitet.

4. Verfahren zur Steuerung einer elektrischen Drehmaschine nach Anspruch 1, **dadurch gekennzeichnet, dass** der Nennbetriebsmodus der Brücke von Schaltern nach einer Dauer wieder hergestellt wird, die mindestens gleich der Entmagnetisierungszeit (Δt) des Erregermagnetkreises ist, und wenn der Erregerstrom (Iexc) einen vorbestimmten Intensitätsschwellenwert (Is) unterschreitet.

5. Verfahren zur Steuerung einer elektrischen Drehmaschine nach einem der vorhergehenden Ansprüche 1 bis 4, **dadurch gekennzeichnet, dass** die Leistungsschaltung (12, 16) ferner Energiespeichermittel (16) aufweist.

6. Verfahren zur Steuerung einer elektrischen Drehmaschine nach einem der vorhergehenden Ansprüche 1 bis 5, **dadurch gekennzeichnet, dass** das Stromnetz ein Bordnetz eines Kraftfahrzeuges ist.

7. Steuer- und Leistungsmodul (7, 12, 16) einer elektrischen Drehmaschine, die an ein Stromnetz angeschlossen ist, wobei die Maschine mehrere Phasenwicklungen (9) und eine Erregerwicklung (11) aufweist, die von einem Erregerstrom (Iexc) durchflossen wird, der einen magnetischen Fluss in einem Erregermagnetkreis (10) erzeugt, wobei das Modul (7, 12, 16) Folgendes aufweist:
- eine Leistungsschaltung (12, 16), die mehrere Zweige aufweist, die jeweils aus einer Brücke von Schaltern gebildet sind, die dazu bestimmt sind, mit den Phasenwicklungen (9) verbunden zu werden, die geeignet ist, das Stromnetz mit einer Ausgangsspannung (Vres), die gleich einer Nennspannung (Vn) in einem Nennbetriebsmodus der Brücke von Schaltern ist, zu speisen;
- eine elektronische Schaltung (7) zur Steuerung und zur Regelung, die die Leistungsschaltung (12, 16) steuert und den Erregerstrom (Iexc) überwacht, wobei die elektronische Schaltung (7) ferner Mittel zum Verriegeln der Brücke von Schaltern von mindestens einem der Zweige der Leistungsschaltung (12, 16) in einem leitenden Zustand aufweist, wenn die Ausgangsspannung (Vres) eine vorbestimmte Spannungsschwelle überschreitet, die höher als die Nennspannung (Vn) ist,
**dadurch gekennzeichnet, dass** das Modul ferner Mittel zum Wiederherstellen des Nennbetriebsmodus der Brücke von Schaltern nach einem Kriterium aufweist, das von der Ausgangsspannung (Vres) unabhängig ist.

8. Steuer- und Leistungsmodul (7, 12, 16) einer elektrischen Drehmaschine nach Anspruch 7, **dadurch gekennzeichnet, dass** die Mittel zum Wiederherstellen nach einer vorherbestimmten Zeitspanne einwirken, die mindestens gleich der Entmagnetisierungszeit (Δt) des Erregermagnetkreises (10) ist.

9. Steuer- und Leistungsmodul (7, 12, 16) einer elektrischen Drehmaschine nach Anspruch 7, **dadurch gekennzeichnet, dass** die Mittel zum Wiederherstellen einwirken, wenn der Erregerstrom (Iexc) einen vorbestimmten Intensitätsschwellenwert (Is) unterschreitet.

10. Steuer- und Leistungsmodul (7, 12, 16) einer elektrischen Drehmaschine nach Anspruch 7, **dadurch gekennzeichnet, dass** die Mittel zum Wiederherstellen nach einer Dauer einwirken, die mindestens gleich der Entmagnetisierungszeit (Δt) des Erregermagnetkreises (10) ist, und wenn der Erregerstrom (Iexc) einen vorbestimmten Intensitätsschwellenwert (Is) unterschreitet.

11. Steuer- und Leistungsmodul (7, 12, 16) einer elektrischen Drehmaschine nach einem der vorhergehenden Ansprüche 7 bis 10, **dadurch gekennzeichnet, dass** die Leistungsschaltung ferner Energiespeichermittel (16) aufweist.

12. Elektrische Drehmaschine, umfassend ein Steuer- und Leistungsmodul (7, 12, 16) nach einem der vorhergehenden Ansprüche 7 bis 11.

## Claims

1. Method for controlling a rotary electric machine connected to an electrical network, in a case of load shedding, said machine comprising:
- a plurality of phase windings (9);
- a power circuit (12, 16), including a plurality of branches each formed from a switch bridge the switches of which are intended to be associated with said phase windings (9), which circuit is capable of supplying power to said electrical network under an output voltage (Vres) that is equal to a nominal voltage (Vn) in a nominal operating mode of said switch bridge;
- an excitation winding (11) through which an excitation current (Iexc) flows producing a magnetic flux in an excitation magnetic circuit (10);
- an electronic control and regulation circuit (7) driving said power circuit (12, 16) and controlling said excitation current (Iexc);
and said method being of the type of those consisting of locking said switch bridge of at least one of said branches of said power circuit (12, 16) in a conducting state when said output voltage (Vres) exceeds a predetermined voltage threshold (Vs) that is higher than said nominal voltage (Vn),
**characterized in that** said nominal operating mode of said switch bridge is re-established according to a criterion independent of said output voltage (Vres).

2. Method for controlling a rotary electric machine according to Claim 1, **characterized in that** said nominal operating mode of said switch bridge is re-established after a predetermined period that is at least equal to the demagnetization time (Δt) of said excitation magnetic circuit (10).

3. Method for controlling a rotary electric machine according to Claim 1, **characterized in that** said nominal operating mode of said switch bridge is re-established when said excitation current (Iexc) falls below a predetermined current threshold (Is).

4. Method for controlling a rotary electric machine according to Claim 1, **characterized in that** said nominal operating mode of said switch bridge is re-established after a duration that is at least equal to the demagnetization time (Δt) of said excitation magnetic circuit and when said excitation current (Iexc) falls below a predetermined current threshold (Is).

5. Method for controlling a rotary electric machine according to any one of the preceding Claims 1 to 4, **characterized in that** said power circuit (12, 16) additionally comprises energy accumulation means (16).

6. Method for controlling a rotary electric machine according to any one of the preceding Claims 1 to 5, **characterized in that** said electrical network is an on-board network of an automotive vehicle.

7. Power and control module (7, 12, 16) of a rotary electric machine connected to an electrical network, said machine having a plurality of phase windings (9) and an excitation winding (11) through which an excitation current (Iexc) flows producing a magnetic flux in an excitation magnetic circuit (10), said module (7, 12, 16) comprising:
- a power circuit (12, 16), including a plurality of branches each formed from a switch bridge the switches of which are intended to be associated with said phase windings (9), which circuit is capable of supplying power to said electrical network under an output voltage (Vres) that is equal to a nominal voltage (Vn) in a nominal operating mode of said switch bridge;
- an electronic control and regulation circuit (7) driving said power circuit (12, 16) and controlling said excitation current (Iexc), said electronic circuit (7) additionally including means for locking said switch bridge of at least one of said branches of said power circuit (12, 16) in a conducting state when said output voltage (Vres) exceeds a predetermined voltage threshold that is higher than said nominal voltage (Vn),
**characterized in that** said module additionally includes means for re-establishing the nominal operating mode of said switch bridge according to a criterion independent of said output voltage (Vres).

8. Power and control module (7, 12, 16) of a rotary electric machine according to Claim 7, **characterized in that** said re-establishment means act after a predetermined period that is at least equal to the demagnetization time (Δt) of said excitation magnetic circuit (10).

9. Power and control module (7, 12, 16) of a rotary electric machine according to Claim 7, **characterized in that** said re-establishment means act when said excitation current (Iexc) falls below a predetermined current threshold (Is).

10. Power and control module (7, 12, 16) of a rotary electric machine according to Claim 7, **characterized in that** said re-establishment means act after a duration that is at least equal to the demagnetization time (Δt) of said excitation magnetic circuit (10) and when said excitation current (Iexc) falls below a predetermined current threshold (Is).

11. Power and control module (7, 12, 16) of a rotary electric machine according to any one of the preceding Claims 7 to 10, **characterized in that** said power circuit additionally comprises energy accumulation means (16).

12. Rotary electric machine comprising a power and control module (7, 12, 16) according to any one of the preceding Claims 7 to 11.
